(19) Europäisches Patentamt / European Patent Office / Office européen des brevets

(11) EP 2 755 050 B1

(12) FASCICULE DE BREVET EUROPEEN

(45) Date de publication et mention
de la délivrance du brevet:
**22.07.2015 Bulletin 2015/30**

(51) Int Cl.:
*G01S 19/44* *(2010.01)*    *G01S 19/29* *(2010.01)*
*G01S 1/02* *(2010.01)*

(21) Numéro de dépôt: **14150652.7**

(22) Date de dépôt: **09.01.2014**

(54) **Dispositif de poursuite de signaux de radionavigation**

Gerät zum Verfolgen von Navigationssignalen

Tracking device for radionavigation signals

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.01.2013 FR 1350211**

(43) Date de publication de la demande:
**16.07.2014 Bulletin 2014/29**

(73) Titulaires:
• **Centre National d'Etudes Spatiales**
  **75039 Paris Cedex 01 (FR)**
• **M3 Systems**
  **31410 Lavernose-Lacasse (FR)**

(72) Inventeurs:
• **Vigneau, Willy**
  **31600 Muret (FR)**
• **Jardak, Nabil**
  **31600 Muret (FR)**

• **Paimblanc, Philippe**
  **31500 Toulouse (FR)**
• **Puengnim, Anchalee**
  **90409 Nürnberg (DE)**
• **Ries, Lionel**
  **81290 Viviers les Montagnes (FR)**

(74) Mandataire: **Office Freylinger**
  **P.O. Box 48**
  **8001 Strassen (LU)**

(56) Documents cités:
**US-A- 3 883 873        US-A1- 2003 058 163**
**US-A1- 2005 101 248**

• **VOLLATH U ET AL: "ANALYSIS OF THREE-CARRIER AMBIGUITY RESOLUTION TECHNIQUE FOR PRECISE RELATIVE POSITIONING IN GNSS-2", NAVIGATION, INSTITUTE OF NAVIGATION, FAIRFAX, VA, US, vol. 46, no. 1, 21 mars 1999 (1999-03-21), pages 13-23, XP008024320, ISSN: 0028-1522**

EP 2 755 050 B1

## Description

### Domaine technique

La présente invention concerne le domaine de la radionavigation, plus précisément un dispositif de poursuite d'un signal de radionavigation (ou signal radioélectrique de navigation). Le champ d'application de l'invention est notamment la réception de signaux de radionavigation émis par des émetteurs d'un système de positionnement par satellite (abrégé GNSS, pour « Global Navigation Satellite System »), p. ex. GPS (de l'anglais « Global Positioning System), Galileo, Glonass, QZSS, Compass, IRNSS, etc.

### Etat de la technique

De manière générale, les signaux de radionavigation émis par des satellites (ou pseudolites) d'un système de positionnement se présentent sous la forme d'une porteuse modulée par une forme d'onde d'étalement contenant un code binaire pseudo-aléatoire. La modulation de la porteuse provoquant l'étalement du spectre autour de la fréquence de la porteuse, les signaux de radionavigation sont souvent appelés « en spectre étalé ». Les codes pseudo-aléatoires représentent un identificateur du signal et donc du satellite émetteur. Connus des récepteurs, ils permettent à ceux-ci un Accès Multiple à Répartition de Code (AMRC). Accessoirement, certains signaux de positionnement par satellites peuvent aussi transporter des données utiles (p. ex. le message de navigation) sous forme d'une séquence binaire (à rythme nettement moins élevé que le code pseudo-aléatoire) modulée en plus sur la porteuse. Dans ce qui suit, on fera abstraction de cette charge de données utiles.

Dans le cas de GPS, les signaux de radionavigation sont transmis dans les bandes de fréquences L1, centrée sur 1575,42 MHz, L2, centrée sur 1227,6 MHz, et L5, centrée sur 1176,45 MHz. Les satellites du GNSS européen (aussi connu sous le nom de Galileo) transmettront dans les bandes E2-L1-E1 (la portion de bande médiane L1 étant la même que celle du GPS), E5a (qui, selon la nomenclature Galileo, représente la bande L5 prévue pour le GPS), E5b (centrée sur 1207,14 MHz) et E6 (centrée sur 1278,75 MHz). Dans ce qui suit, les bandes E5a et E5b seront traitées ensemble comme bande E5, avec 1191,795 MHz comme fréquence centrale. Pour le cas des signaux ouverts de Galileo, leur description complète peut être trouvée dans le « Galileo Open Service Signal-In-Space Interface Control Document », ou Galileo OS SIS ICD, disponible sur le site web http://ec.europa.eu/enterprise/policies/satnav/galileo/open-service/index_en.htm. On peut encore noter que les satellites de la constellation Compass transmettent ou transmettront dans la bande B1 (centrée sur 1561,098 MHz), B1-2 (centrée sur 1589,742 MHz), L1 (centrée sur 1575,42 MHz), B2 (centrée sur 1207,14 MHz), et B3 (centrée sur 1268,52 MHz). Le système GLONASS utilise les fréquences centrales 1602 MHz et 1246 MHz. Les fréquences centrales indiquées représentent les fréquences des porteuses des différents signaux.

La réception d'un signal de radionavigation comprend normalement une multiplication du signal reçu par une réplique interne de la porteuse générée dans le récepteur par un oscillateur piloté par une boucle de poursuite de porteuse et une autre multiplication par une réplique interne de la forme d'onde d'étalement produite par un générateur de forme d'onde piloté par une boucle de poursuite de forme d'onde d'étalement (appelée aussi « boucle de poursuite de code »). Les signaux d'erreur ou d'asservissement des boucles de poursuite de porteuse et de forme d'onde d'étalement sont utilisés par le récepteur pour déterminer sa position. Le signal d'écart de phase entre la porteuse du signal reçu et la réplique interne de porteuse produit à chaque pas de temps par la boucle de poursuite de porteuse fournit une première mesure ou observable (la mesure ou l'observable de phase). Le signal de décalage temporel entre la forme d'onde d'étalement du signal reçu et la réplique interne de forme d'onde d'étalement produit à chaque pas de temps par la boucle de poursuite de forme d'onde d'étalement représente une deuxième mesure ou observable (la mesure ou l'observable de code).

L'observable de phase n'est pas utilisée par tous les récepteurs. Surtout les récepteurs bon marché déterminent leur position uniquement sur la base des observations de code. Les mesures de phase sont mises en pratique, par exemple, dans les méthodes RTK (de l'anglais : « Real Time Kinematic ») et PPP (de l'anglais : « Precise Point Positioning »).

Les mesures de code sont d'une précision métrique tandis que les mesures de phase sont d'une précision de quelques mm. Toutefois, les mesures de phase présentent le grand inconvénient qu'elles sont ambiguës dans le sens que le nombre de cycles entiers entre le satellite et le récepteur est inconnu au départ. Les mesures de phase sont modulo un cycle et ne livrent que la partie réelle de la différence de phase de la porteuse entre l'émission par le satellite et le récepteur. Afin de pouvoir bénéficier de la précision des mesures de phase, un récepteur doit résoudre les ambiguïtés dont elles sont entachées.

La poursuite de la phase de la porteuse d'un signal de radionavigation est très sensible aux conditions de l'environnement. Le risque d'un décrochage est beaucoup plus élevé que pour la poursuite du code. De plus, la gestion des sauts de cycle est une tâche difficile. Dans un environnement difficile (par exemple en milieu urbain), la disponibilité des mesures de phase risque d'être très faible, ce qui réduit fortement l'intérêt des récepteurs capables d'effectuer et de traiter des observations de phase.

A titre d'exemple, les documents suivants discutent de la mesure de phase et de la résolution des ambigüités: US 2003/0058163, US 2005/0101248, US 3,883,873 et « Analysis of Three-Carrier Ambiguity Resolution Technique for precise relative positioning in GNSS-2 » par U. VOLLATH et al., dans NAVIGATION, Journal of the Institute of Navigation, Fairfax, VA, US, vol.6, No.1, 21 mars 1999-pages 13-23.

**Objet de l'invention**

Un objet de la présente invention est d'augmenter la robustesse des mesures de phase.

**Description générale de l'invention**

Selon l'invention, il est proposé un dispositif de poursuite de signaux de radionavigation, comprenant un premier étage de poursuite d'un premier signal de radionavigation contenu dans un signal entrant à appliquer au dispositif et un deuxième étage de poursuite d'un deuxième signal de radionavigation contenu dans le signal entrant. Le premier signal de radionavigation est supposé comprendre une première porteuse à une première fréquence modulée par une première forme d'onde d'étalement, tandis que le deuxième signal de radionavigation est supposé comprendre une deuxième porteuse à une deuxième fréquence, différente de la première fréquence, modulée par une deuxième forme d'onde d'étalement. Le premier étage de poursuite comprend une première boucle à verrouillage de phase de porteuse avec un mélangeur configuré pour multiplier le signal entrant avec une réplique locale de la première porteuse. La première boucle à verrouillage de phase de porteuse comprend un discriminateur de phase de la première porteuse configuré pour produire un premier signal d'erreur résultant d'un premier écart de phase entre la première porteuse et la réplique locale de la première porteuse. La première boucle à verrouillage de phase de porteuse est configurée pour régler la phase de la réplique locale de la première porteuse sur la base du premier signal d'erreur. Le deuxième étage de poursuite comprend une deuxième boucle à verrouillage de phase de porteuse avec un mélangeur configuré pour multiplier le signal entrant avec une réplique locale de la deuxième porteuse. La deuxième boucle à verrouillage de phase de porteuse comprend un discriminateur de la phase du battement entre la première porteuse et la deuxième porteuse configuré pour produire un deuxième signal d'erreur résultant d'une différence entre le premier écart de phase et un deuxième écart de phase entre la deuxième porteuse et la réplique locale de la deuxième porteuse. La deuxième boucle à verrouillage de phase est configurée pour régler la phase de la réplique locale de la deuxième porteuse sur la base des premier et deuxième signaux d'erreur.

On note que le dispositif selon l'invention peut être employé dans le cadre d'un récepteur GNSS bi-fréquence ou multifréquence. Au lieu de poursuivre les premier et deuxième signaux de radionavigation de manière individuelle (c.-à-d. par des boucles de poursuite de phase séparées), le dispositif de poursuite de l'invention utilise des boucles à verrouillage de phase couplées entre elles. La phase du premier signal de radionavigation est poursuivie sur la base du premier signal d'erreur tandis que celle du deuxième signal de radionavigation est poursuivie grâce à l'utilisation du premier signal d'erreur et du deuxième signal d'erreur qui dépend de la phase du battement entre les deux porteuses. Dans ce document, le terme « battement » désigne la variation périodique de l'amplitude de l'oscillation résultant de la composition de deux porteuses. Le signal de battement a la fréquence $|f_1\text{-}f_2|$ où $f_1$ et $f_2$ représentent respectivement la première et la deuxième fréquence de porteuse. La phase du battement dépend de la phase de chacune des deux porteuses. Intuitivement, la connaissance de la phase d'une des porteuses et de la phase du battement permet de retrouver la phase de l'autre porteuse. Dans le dispositif de poursuite selon l'invention, la boucle de poursuite de phase de la deuxième porteuse règle la phase de la réplique locale de la deuxième porteuse en utilisant cette propriété. Un avantage de cette approche est que le dispositif selon l'invention ne poursuit directement que la phase de la première porteuse. La deuxième boucle à verrouillage de phase poursuit le battement, qui se trouve à une fréquence ($|f_1\text{-}f_2|$) nettement inférieure à la fréquence de la deuxième porteuse. Cette fréquence étant plus basse, le nombre de sauts de phase par unité de temps est considérablement réduit par rapport aux porteuses, ce qui entraîne une robustesse élevée de la mesure de phase de battement. La méthode utilisée par le dispositif selon l'invention permet ainsi une poursuite conjointe, plus robuste, de la phase de deux signaux de radionavigation en provenance du même émetteur (satellite ou pseudolite).

De préférence, la première boucle à verrouillage de phase comprend un oscillateur à commande numérique (OCN), commandé par un premier filtre recevant le premier signal d'erreur en entrée. La deuxième boucle à verrouillage de phase comprend de préférence un oscillateur à commande numérique commandé par le premier filtre et un deuxième filtre (de la deuxième boucle de verrouillage de phase) recevant le deuxième signal d'erreur en entrée. Le deuxième filtre peut comprendre, p.ex. un filtre de Kalman, un filtre de Kalman étendu ou un filtre particulaire.

De préférence, les premier et deuxième signaux de radionavigation sont choisis parmi les signaux Galileo E1, E5 et E6 ou parmi les signaux GPS L5, L2C et L1 ou encore parmi les signaux GLONASS L3, G2 et G1. La méthode utilisée par le dispositif selon l'invention est particulièrement avantageuse si la poursuite de phase de porteuse de l'un des signaux est significativement plus robuste que la poursuite du ou des autres signaux. Dans une telle situation, le signal dont la poursuite de phase de porteuse est la plus robuste peut être choisi comme le premier signal de radionavigation. La phase de porteuse des autres signaux de radionavigation n'a pas besoin d'être poursuivie directement mais peut être trouvée grâce à la phase de battement. Selon un mode de réalisation avantageux de l'invention, le premier signal de radionavigation est un signal Galileo E5 et le deuxième signal de radionavigation est un signal Galileo E1 ou un signal Galileo E6. A cause de la modulation « AltBOC » du signal Galileo E5, la poursuite de la phase de porteuse de ce signal est plus robuste que celle de E1 (modulation CBOC) ou de E6.

Le premier étage de poursuite comprend de préférence un premier corrélateur configuré pour corréler une réplique locale de la première forme d'onde d'étalement avec le signal entrant multiplié par la réplique locale de la première porteuse. Le discriminateur de phase de la première porteuse peut être configuré de sorte à déterminer le premier signal d'erreur sur la base du résultat de corrélation produit par le premier corrélateur.

Le deuxième étage de poursuite comprend de préférence un deuxième corrélateur configuré pour corréler une réplique locale de la deuxième forme d'onde d'étalement avec le signal entrant multiplié par la réplique locale de la deuxième porteuse. Le discriminateur de phase du battement entre la première porteuse et la deuxième porteuse peut être configuré pour déterminer le deuxième signal d'erreur sur la base du résultat de corrélation produit par le premier corrélateur et du résultat de corrélation produit par le deuxième corrélateur.

De préférence, le discriminateur de phase du battement entre la première porteuse et la deuxième porteuse est configuré de sorte qu'il utilise soit le produit du résultat de corrélation fourni par le premier corrélateur et du conjugué complexe du résultat de corrélation fourni par le deuxième corrélateur, soit le produit du conjugué complexe du résultat de corrélation produit par le premier corrélateur et du résultat de corrélation produit par le deuxième corrélateur pour produire le deuxième signal d'erreur.

Le dispositif selon l'invention peut être configuré pour le traitement conjoint de trois signaux de radionavigation voire plus. Dans ce cas, un troisième étage de poursuite d'un troisième signal de radionavigation est à prévoir. Le troisième signal de radionavigation est supposé comprendre une troisième porteuse à une troisième fréquence, différente des première et deuxième fréquences, modulée par une troisième forme d'onde d'étalement. Le troisième étage de poursuite est de préférence structuré de la même manière que le deuxième étage de poursuite. Il peut notamment comprendre une troisième boucle à verrouillage de phase de porteuse avec un mélangeur configuré pour multiplier le signal entrant avec une réplique locale de la troisième porteuse. La troisième boucle à verrouillage de phase de porteuse peut comprendre un discriminateur de phase d'un battement entre la première porteuse et la troisième porteuse configuré pour produire un troisième signal d'erreur résultant d'une différence entre le premier écart de phase et un troisième écart de phase entre la troisième porteuse et la réplique locale de la troisième porteuse. La troisième boucle à verrouillage de phase est alors configurée pour régler la phase de la réplique locale de la troisième porteuse sur la base des premier et troisième signaux d'erreur. De préférence, les premier, deuxième et troisième signaux de radionavigation sont choisis parmi les signaux Galileo E1, E5 et E6 ou parmi les signaux GPS L5, L2C et L1 ou encore parmi les signaux GLONASS L3, G2 et G1.

La troisième boucle à verrouillage de phase comprend de préférence un oscillateur à commande numérique commandé par le premier filtre et un troisième filtre (de la troisième boucle de verrouillage de phase) recevant le troisième signal d'erreur en entrée. Autrement, l'oscillateur à commande numérique peut être commandé par le même filtre de Kalman, le filtre de Kalman étendu ou le filtre particulaire qui pilote l'oscillateur à commande numérique de la deuxième boucle.

Le troisième étage de poursuite comprend de préférence un troisième corrélateur configuré pour corréler une réplique locale de la troisième forme d'onde d'étalement avec le signal entrant multiplié par la réplique locale de la troisième porteuse. Le discriminateur de phase du battement entre la première porteuse et la troisième porteuse peut alors déterminer le troisième signal d'erreur sur la base du résultat de corrélation produit par le premier corrélateur et du résultat de corrélation produit par le troisième corrélateur.

Le discriminateur de phase du battement entre la première porteuse et la troisième porteuse est de préférence configuré de sorte à utiliser le produit du résultat de corrélation produit par le premier corrélateur et du conjugué complexe du résultat de corrélation produit par le troisième corrélateur ou le produit du conjugué complexe du résultat de corrélation produit par le premier corrélateur et du résultat de corrélation produit par le troisième corrélateur pour produire le troisième signal d'erreur.

Il sera apprécié que le dispositif selon l'invention puisse être réalisé par un processeur de signaux numériques (DSP, de l'anglais « Digital Signal processor »).

Un aspect de l'invention concerne un récepteur GNSS, comprenant un ou plusieurs dispositifs de poursuite de signaux de radionavigation tels que décrits.

**Brève description des dessins**

D'autres particularités et caractéristiques de l'invention ressortiront de la description détaillée de quelques modes de réalisation avantageux présentés ci-dessous, à titre d'illustration, avec référence aux dessins annexés. Ceux-ci montrent:

Fig. 1: un schéma de principe d'un dispositif de poursuite selon un premier mode de réalisation avantageux de l'invention ;

Fig. 2: un schéma de principe d'un dispositif de poursuite selon un deuxième mode de réalisation avantageux de l'invention ;

Fig.3: un schéma de principe d'une variante du dispositif de poursuite de la figure 2 ;

Fig. 4: un schéma de principe d'un récepteur GNSS comprenant des dispositifs de poursuite selon l'invention.

**Description d'une exécution préférée**

Un récepteur de signaux de radionavigation peut réaliser des mesures de code (non ambiguës) et des mesures de phase (ambiguës d'un nombre entier de cycles) sur les signaux de radionavigation qu'il reçoit des différents satellites en visibilité (c.-à-d. au-dessus de l'horizon). Un récepteur multi-fréquence peut effectuer ces mesures sur au moins deux fréquences de porteuse $f_1$ et $f_2$ distinctes. En supposant un récepteur bi-fréquence, on peut donc avoir, pour chaque satellite en visibilité et à chaque pas de temps ($t_k$), deux mesures de code, notées $P_1^j(t_k)$ et $P_2^j(t_k)$, et deux mesures de phase, notées $\Phi_1^j(t_k)$ et $\Phi_2^j(t_k)$, sur les fréquences $f_1$ et $f_2$, où l'indice supérieur (j) indique l'émetteur (le satellite ou le pseudolite) dont le signal provient au récepteur. Comme les satellites orbitent autour de la Terre, seulement une partie d'entre eux est visible à un moment donné depuis le lieu du récepteur. Pour faciliter la notation, la dépendance du temps et l'indice de satellite ne seront pas toujours indiqués explicitement dans ce qui suit.

On utilisera les notations suivantes :

$$\lambda_1 = \frac{c}{f_1}, \quad \lambda_2 = \frac{c}{f_2}$$

où c représente la vitesse de la lumière.

Les mesures de code et de phase remplissent les équations (mesures à gauche, paramètres du modèle à droite) suivantes :

$$P_1 = r + \Delta_1^{iono} + c\Delta h$$
$$P_2 = r + \Delta_2^{iono} + c\Delta h$$

$$\lambda_1 \Phi_1 = r + \lambda_1 W - \Delta_1^{iono} + c\Delta h + \lambda_1 N_1$$
$$\lambda_2 \Phi_2 = r + \lambda_2 W - \Delta_2^{iono} + c\Delta h + \lambda_2 N_2$$

(Eq. 1)

où

- r représente la distance de propagation entre le satellite et le récepteur, incluant l'élongation troposphérique, effets relativistes, etc. ;

- $\Delta_1^{iono}$ et $\Delta_2^{iono}$ décrivent l'allongement ionosphérique qui varie approximativement en fonction du carré de la fréquence (d'où $\Delta_2^{iono} \approx \Delta_1^{iono} \cdot f_1^2 / f_2^2$) ;

- $N_1$ et $N_2$ représentent les ambiguïtés de phase (entières) des deux porteuses ;

- W représente la contribution de l'effet « wind-up » en cycles ; et

- $\Delta h$ est la différence entre l'horloge du récepteur et l'horloge de l'émetteur.

Dans le système d'équations ci-dessus, les mesures de code $P_1$, $P_2$ sont exprimées en unités de longueur, tandis que les mesures de phase $\Phi_1$, $\Phi_2$ sont exprimées en cycles.

La combinaison widelane est définie comme suit :

$$\Phi_w = \Phi_1 - \Phi_2 = \frac{f_w}{c} r + N_w + f_w \Delta h - (\frac{1}{\lambda_1} \Delta_1^{iono} - \frac{1}{\lambda_2} \Delta_2^{iono}) \qquad \text{(Eq. 2)}$$

où

- $f_w$ est la fréquence de battement, définie par $f_w = f_1 - f_2$ et
- $N_w$ est l'ambiguïté widelane définie par $N_w = N1 - N2$.

On note $\lambda_w = c/(f_1 - f_2) = (1/\lambda_1 - 1/\lambda_2)^{-1}$ la longueur d'onde du battement. La longueur d'onde du battement entre les fréquences E1 et E5 de Galileo s'élève, p.ex., à peu près à 78 cm.

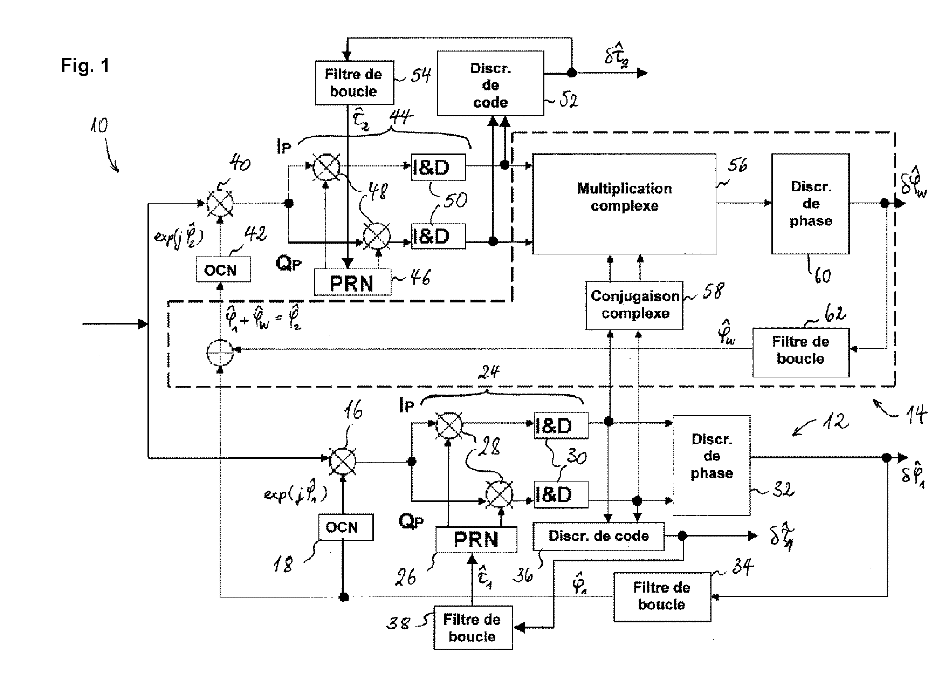

La figure 1 montre un dispositif de poursuite 10 selon un mode de réalisation préféré de l'invention. Le dispositif de poursuite 10 comprend un premier étage de poursuite 12 pour poursuivre un signal Galileo E5 contenu dans le signal entrant et un deuxième étage de poursuite 14 pour poursuivre un signal Galileo E1 (ou E6) contenu dans le signal entrant. Pour la suite, à titre d'exemple, on utilisera $f_1$ et $f_2$ pour désigner la fréquence de la porteuse de E5 et de E1, respectivement.

Le signal entrant comprend les signaux de radionavigation à la fréquence $f_1$ et à la fréquence $f_2$ transmis par les différents satellites en visibilité. Les signaux en provenance du même émetteur sont traités conjointement. Par contre, il n'est pas prévu de coupler la poursuite de signaux provenant d'émetteurs différents. Un récepteur GNSS comprendra donc un nombre de dispositifs de poursuite 10 correspondant au nombre de satellites (ou de pseudolites) que le récepteur doit être capable de poursuivre en parallèle.

Le premier étage de poursuite 12 comprend un mélangeur 16 multipliant le signal entrant avec une réplique locale de la porteuse E5, générée par un oscillateur à commande numérique 18. En notation complexe, la réplique locale de la porteuse E5 s'écrit $\exp(2\pi\hat{f}_1 t + \hat{\varphi}_1)$, où $\hat{f}_1$ est l'estimée de la fréquence (variable car soumise à l'effet Doppler) et $\hat{\varphi}_1$ l'estimée de valeur réelle de la phase $\varphi_1$ de la porteuse (en radians). En sortie du mélangeur 16, on dispose d'une voie « en phase », notée I, et d'une voie « en quadrature de phase », notée Q, qui sont amenées à un étage de corrélation 24.

A l'étage de corrélation 24 les voies I et Q sont chacune multipliées par une réplique locale de la forme d'onde d'étalement et intégrées. Les générateurs de réplique de forme d'onde d'étalement sont représentées sur la figure 1 comme des générateurs de réplique de code pseudo-aléatoire 26 afin de ne pas trop encombrer le dessin. Si le signal à recevoir contient une sous-porteuse (p.ex. une modulation BOC (de l'anglais « Binary Offset Carrier »), AltBOC (de l'anglais « Alternative BOC ») ou autre), l'étage de corrélation 24 présente une plus grande complexité (voir p.ex. le brevet FR 2 941 535). La figure 1 est par ailleurs simplifiée en ce qu'elle ne montre que le corrélateur dit « prompt ». L'étage de corrélation 24 peut comprendre d'autres corrélateurs. L'architecture la plus performante comprend un corrélateur « prompt », un corrélateur « en avance » (en anglais : « early correlator ») et un corrélateur « en retard » (en anglais « late correlator »).

La réplique du code pseudo-aléatoire qui est mélangée avec les voies I et Q par les mélangeurs 28 est notée $C_1(t-\hat{\tau}_1)$ où $\hat{\tau}_1$ est l'estimée de la valeur réelle du décalage de code $\tau_1$ et $C_1$ la fonction pouvant prendre les valeurs +1 et -1 décrivant le code pseudo-aléatoire. On a $P_1 = c\hat{\tau}_1$ en cas d'accrochage de la boucle de poursuite de code.

La sortie des corrélateurs 30 est utilisée par une boucle à verrouillage de phase et de fréquence. Un discriminateur de phase 32 génère un signal d'erreur indiquant l'erreur de phase résiduelle, c.-à-d. la différence entre l'estimée $\hat{\varphi}_1$ de la phase et de la valeur réelle $\varphi_1$. Le signal d'erreur est noté $\delta\varphi_1 = \hat{\varphi}_1 - \varphi_1$. Le discriminateur de phase peut être un discriminateur « atan2 » ; dans ce cas, $\delta\varphi_1(t_k) = \text{atan } 2(Q_{P1}(t_k), I_{P1}(t_k))$, où $Q_{P1}(t_k)$ est le résultat de la corrélation sur la voie prompte (index « P ») en quadrature de phase et $I_{P1}(t_k)$ est le résultat de la corrélation sur la voie prompte en phase. Un discriminateur de fréquence (non illustré sur la figure 1) produit un signal d'erreur indiquant l'erreur de fréquence résiduelle, c.-à-d. la différence $\delta\hat{f}_1 = f_1 - \hat{f}_1$. Le discriminateur de fréquence peut être un discriminateur « cross-product » (produit croisé) calculant $\delta\hat{f}_1 = \dfrac{I_{P1}(t_{k-1})Q_{P1}(t_k) - I_{P1}(t_k)Q_{P1}(t_{k-1})}{T}$, où $T = t_k - t_{k-1}$. Un filtre de boucle 34 reçoit les signaux d'erreur de phase et de fréquence et en déduit le signal de commande de l'oscillateur à commande numérique 18.

La sortie des corrélateurs 30 est en outre utilisée par une boucle à verrouillage de code (ou boucle de poursuite de code). Un discriminateur dit « de code » 36 génère un signal d'erreur indiquant l'erreur de décalage de code résiduelle, c.-à-d. la différence $\delta\hat{\tau}_1 = \hat{\tau}_1 - \tau_1$. Ce discriminateur peut être, p. ex., un discriminateur « early-late normalisé », qui

calcule : $\delta\hat{\tau}_1 = \delta T \cdot \dfrac{\sqrt{I_{E1}(t_k)^2 + Q_{E1}(t_k)^2} - \sqrt{I_{L1}(t_k)^2 + Q_{L1}(t_k)^2}}{\sqrt{I_{E1}(t_k)^2 + Q_{E1}(t_k)^2} + \sqrt{I_{L1}(t_k)^2 + Q_{L1}(t_k)^2}}$ , où $\delta T = (1 - \dfrac{\Delta_{EL}}{2})$, avec $\Delta_{EL}$ le décalage temporel entre les corrélateurs en avance et les corrélateurs en retard. $I_{E1}$, $Q_{E1}$ sont les sorties des corrélateurs en avance (« early ») et $I_{L1}$, $Q_{L1}$ sont les sorties des corrélateurs en retard (« late »). Le signal d'erreur de décalage de code est amené à un filtre de boucle de code 38 qui en déduit le signal de commande des générateurs de la réplique de la forme d'onde d'étalement (ici représentés par les générateurs de code 26).

Le deuxième étage de poursuite 14 comprend un mélangeur 40 multipliant le signal entrant avec une réplique locale de la porteuse E1, générée par un oscillateur à commande numérique 42. En notation complexe, la réplique locale de la porteuse E1 s'écrit $\exp(2\pi\hat{f}_2 t + \hat{\varphi}_2)$, où $\hat{f}_2$ est l'estimée de la fréquence et $\hat{\varphi}_2$ l'estimée de valeur réelle de la phase $\varphi_2$ de la porteuse E1 (en radians). La sortie « en phase », notée I, et la sortie « en quadrature de phase », notée Q, du mélangeur sont amenées à un étage de corrélation 44.

A l'étage de corrélation 44, des mélangeurs 48 multiplient chacune des voies I et Q avec une réplique locale de la forme d'onde d'étalement et des corrélateurs 50 intègrent les voies I et Q. Les générateurs de réplique de forme d'onde d'étalement sont représentés sur la figure 1 comme des générateurs de réplique de code pseudo-aléatoire 46. Si le signal à recevoir contient une sous-porteuse (p.ex. une modulation BOC (de l'anglais « Binary Offset Carrier »), CBOC (de l'anglais « Composite BOC ») ou autre), l'étage de corrélation 44 présente une plus grande complexité (voir p.ex. le brevet FR 2 941 535). La figure 1 est par ailleurs simplifiée en ce qu'elle ne montre que le corrélateur dit « prompt ». L'étage de corrélation 44 peut comprendre d'autres corrélateurs, notamment un corrélateur « en avance » et un corrélateur « en retard ».

La sortie des corrélateurs 50 sert d'entrée à une boucle de poursuite de code. Un discriminateur de code 52 génère un signal d'erreur indiquant l'erreur de décalage de code résiduelle, c.-à-d. la différence $\delta\tau_2 = \tau_2 - \hat{\tau}_2$. Ce discriminateur peut être, p. ex., un discriminateur « early-late normalisé ». Le signal d'erreur de décalage de code est amené à un filtre de boucle de code 54 qui en déduit le signal de commande des générateurs de la réplique de la forme d'onde d'étalement (ici représentés par les générateurs de code 46). Les boucles de poursuite de code des signaux E5 et E1 sont donc construites de manière analogue dans cet exemple. Il faut toutefois noter que le choix des différents discriminateurs doit être fait en fonction de la modulation des signaux de radionavigation et d'une éventuelle charge utile (message de navigation). Les différents critères pour choisir des discriminateurs appropriés sont bien connus dans le domaine technique et n'ont dont pas besoin d'être répétés dans ce contexte.

La boucle à verrouillage de phase et de fréquence pour poursuivre le deuxième signal de radionavigation combine la sortie des corrélateurs prompts du premier étage de poursuite 12 avec la sortie des corrélateurs prompts du deuxième étage de poursuite 14. La sortie des corrélateurs prompts du premier étage de poursuite 12 s'écrit, en notation complexe, $I_{P1}(t_k) + jQ_{P1}(t_k)$, ce qui peut être représenté par $A_1 \exp(j(\varphi_1 - \hat{\varphi}_1)) = A_1 \exp(j \cdot \delta\hat{\varphi}_1)$. De manière analogue, la sortie des corrélateurs prompts du deuxième étage de poursuite 14 s'écrit, en notation complexe, $I_{P2}(t_k) + jQ_{P2}(t_k)$, ce qui peut être représenté par $A_2 \exp(j(\varphi_2 - \hat{\varphi}_2)) = A_2 \exp(j \cdot \delta\hat{\varphi}_2)$. Le module de conjugaison complexe 58 retourne $A_1 \exp(-j \cdot \delta\hat{\varphi}_1)$ et le module de multiplication complexe 56 calcule donc $A_1 A_2 \exp(j \cdot (\delta\varphi_1 - \delta\varphi_2)$. La grandeur $\delta\varphi_1 - \delta\varphi_2$, qui sera notée $\delta\varphi_w$, correspond à la phase du battement entre la première porteuse et la deuxième porteuse.

Le discriminateur de phase 60 génère un signal d'erreur résultant d'une différence entre le premier écart de phase $\delta\hat{\varphi}_1$ et le deuxième écart de phase $\delta\varphi_2$. Le discriminateur de phase 60, qui retourne $\delta\varphi_w$ en tant que signal d'erreur, peut être un discriminateur de type « atan2 ».

Un discriminateur de fréquence (non illustré sur la figure 1) produit un signal d'erreur indiquant l'erreur de la fréquence de battement résiduelle, c.-à-d. la différence $\delta\hat{f}_w = f_w - \hat{f}_w$. Le discriminateur de fréquence peut être un discriminateur « cross-product » (produit croisé). Un filtre de boucle 62 reçoit les signaux d'erreur de phase et de fréquence de battement et en déduit un signal de correction de phase et de fréquence à combiner avec le signal de commande fourni par le filtre de boucle 34. Le signal qui commande l'oscillateur 42 est donc basé sur l'estimée de la deuxième fréquence $\hat{f}_2$, obtenue par $\hat{f}_2 = \hat{f}_1 + \hat{f}_w$, et la phase $\hat{\varphi}_2$, obtenue par $\hat{\varphi}_2 = \hat{\varphi}_1 + \hat{\varphi}_w$.

Les sorties des discriminateurs 32, 36, 52 et 60 peuvent être utilisées pour la détermination de la position par un module de positionnement (non illustré sur la figure 1).

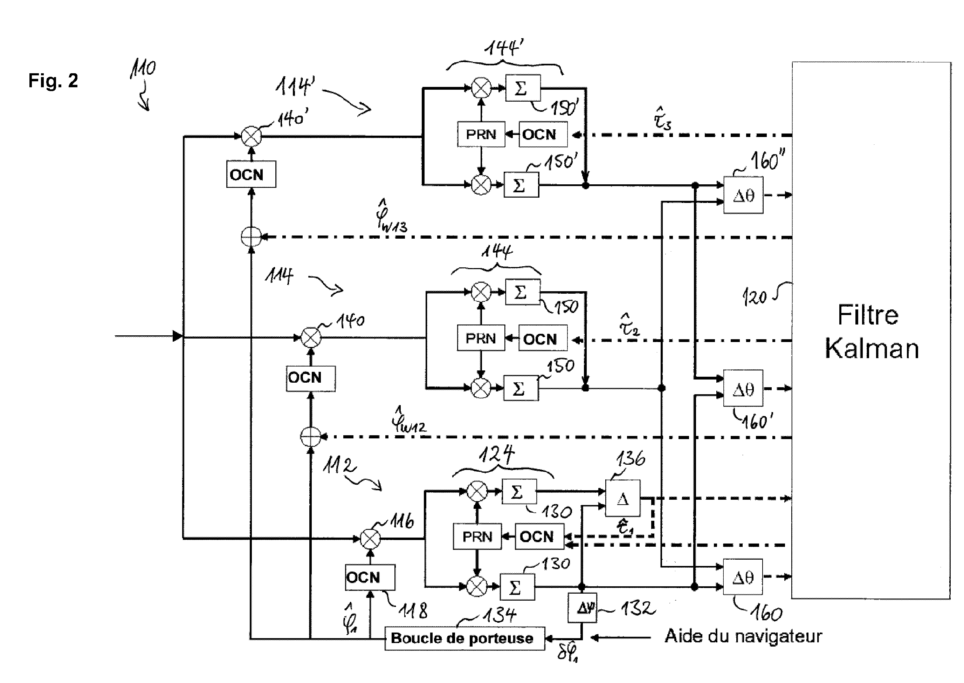

La figure 2 montre un dispositif de poursuite 110 selon un deuxième mode de réalisation préféré de l'invention. Le dispositif de poursuite 110 comprend un premier étage de poursuite 112 pour poursuivre un signal Galileo E5, un deuxième étage de poursuite 114 pour poursuivre un signal Galileo E1 et un troisième étage de poursuite 114' pour poursuivre un signal Galileo E6. Pour la suite, on notera $f_1$, $f_2$ et $f_3$ les fréquences des porteuses E5, E1 et E6, respectivement.

Le signal entrant comprend les signaux de radionavigation aux fréquences $f_1$, $f_2$ et $f_3$ transmis par les différents satellites en visibilité. Les signaux en provenance du même émetteur sont traités conjointement. Par contre, il n'est pas prévu de coupler la poursuite de signaux provenant d'émetteurs différents. Un récepteur GNSS comprendra donc un nombre de dispositifs de poursuite 110 correspondant au nombre de satellites (ou de pseudolites) que le récepteur doit être capable de poursuivre en parallèle.

Le premier étage de poursuite 112 présente essentiellement la même architecture que le premier étage de poursuite du mode de réalisation de la figure 1. Dans un mélangeur 116, le signal entrant est multiplié avec une réplique locale de la porteuse E5, notée $\exp(2\pi \hat{f}_1 t + \hat{\varphi}_1)$, générée par un oscillateur à commande numérique 118. En sortie du mélangeur 116, on dispose d'une voie « en phase », notée I, et d'une voie « en quadrature de phase », notée Q, qui sont amenées au premier étage de corrélation 124.

Dans le premier étage de corrélation, les voies I et Q sont mélangées avec des répliques de la forme d'onde d'étalement et intégrées. Les sorties des corrélateurs sont amenées à un discriminateur de code, qui génère un signal d'erreur indiquant l'erreur de décalage de code résiduelle, c.-à-d. la différence $\hat{\delta\tau}_1 = \tau_1 - \hat{\tau}_1$. Un filtre de boucle de poursuite de code (non illustré) en déduit l'estimée $\hat{\tau}_1$ du décalage de code et l'utilise pour commander un oscillateur à commande numérique, qui à son tour fournit le signal d'horloge qui pilote les générateurs de la réplique de forme d'onde d'étalement.

La sortie des corrélateurs 130 ($A_1 \exp(j(\varphi_1 - \hat{\varphi}_1)) = A_1 \exp(j \cdot \hat{\delta\varphi}_1)$ en notation complexe) est également utilisée par un discriminateur de phase 132, qui génère un signal d'erreur indiquant l'erreur de phase résiduelle, c.-à-d. la différence entre l'estimée $\hat{\varphi}_1$ de la phase et de la valeur réelle $\varphi_1$. Un discriminateur de fréquence (non illustré sur la figure 2) produit un signal d'erreur indiquant l'erreur de fréquence résiduelle, c.-à-d. la différence $\hat{\delta f}_1 = f_1 - \hat{f}_1$. Un filtre de boucle 134 reçoit les signaux d'erreur de phase et de fréquence et en déduit le signal de commande de l'oscillateur à commande numérique 118. Optionnellement, un signal d'aide du navigateur (dépendant de la vitesse et ou de l'accélération du récepteur) peut être appliqué à la boucle de poursuite de porteuse pour augmenter la robustesse de l'accrochage.

Dans le deuxième étage de poursuite 114, le signal entrant est mélangé dans un mélangeur 140 avec une réplique locale de la porteuse E1, notée $\exp(2\pi \hat{f}_2 t + \hat{\varphi}_2)$. Les voies I et Q ainsi obtenues sont ensuite corrélées avec une réplique de la forme d'onde d'étalement. La sortie des corrélateurs 150 ($A_2 \exp(j(\varphi_2 - \hat{\varphi}_2)) = A_2 \exp(j \cdot \hat{\delta\varphi}_2)$ en notation complexe) est combinée avec la sortie des corrélateurs 130 par un discriminateur 160 de la phase du battement entre la première et la deuxième porteuses. Le discriminateur de phase 160 génère un signal d'erreur résultant d'une différence entre le premier écart de phase $\hat{\delta\varphi}_1$ et le deuxième écart de phase $\hat{\delta\varphi}_2$. Le discriminateur de phase 160 retourne $\hat{\delta\varphi}_{w12} = \hat{\delta\varphi}_1 - \hat{\delta\varphi}_2$ en tant que signal d'erreur. Le deuxième étage de poursuite 114 comprend en outre un discriminateur de fréquence (non illustré) produisant un signal d'erreur indiquant l'erreur de la fréquence de battement entre la première et la troisième porteuses, c.-à-d. la différence $\hat{\delta f}_{w12} = f_{w12} - \hat{f}_{w12}$, avec $f_{w12} = f_1 - f_2$.

Le troisième étage de poursuite 114' est construit de manière analogue au deuxième étage de poursuite 114. Dans le troisième étage de poursuite 114', le signal entrant est mélangé dans un mélangeur 140' avec une réplique locale de la porteuse E6, notée $\exp(2\pi \hat{f}_3 t + \hat{\varphi}_3)$. Les voies I et Q ainsi obtenues sont ensuite corrélées avec une réplique de la forme d'onde d'étalement. La sortie des corrélateurs 150' ($A_3 \exp(j(\varphi_3 - \hat{\varphi}_3)) = A_3 \exp(j \cdot \hat{\delta\varphi}_3)$ en notation complexe) est combinée avec la sortie des corrélateurs 130 par un discriminateur 160' de la phase du battement entre la première et la troisième porteuses. Le discriminateur de phase 160' génère un signal d'erreur résultant d'une différence entre le premier écart de phase $\hat{\delta\varphi}_1$ et le troisième écart de phase $\hat{\delta\varphi}_3$. Le discriminateur de phase 160' retourne $\hat{\delta\varphi}_{w13} = \hat{\delta\varphi}_1 - \hat{\delta\varphi}_3$ en tant que signal d'erreur. Le troisième étage de poursuite 114' comprend en outre un discriminateur de fréquence (non illustré) produisant un signal d'erreur indiquant l'erreur de la fréquence de battement entre la première et la troisième porteuses, c.-à-d. la différence $\hat{\delta f}_{w13} = f_{w13} - \hat{f}_{w13}$, avec $f_{w13} = f_1 - f_3$.

La sortie des corrélateurs 150' ($A_3 \exp(j(\varphi_3 - \hat{\varphi}_3)) = A_3 \exp(j \cdot \hat{\delta\varphi}_3)$) est en outre combinée avec la sortie des corrélateurs 150 par un discriminateur 160" de la phase du battement entre la deuxième et la troisième porteuses. Le discriminateur de phase 160" génère un signal d'erreur résultant d'une différence entre le deuxième écart de phase $\hat{\delta\varphi}_2$ et le troisième écart de phase $\hat{\delta\varphi}_3$. Le discriminateur de phase 160" retourne donc $\hat{\delta\varphi}_{w23} = \hat{\delta\varphi}_2 - \hat{\delta\varphi}_3$ en tant que signal d'erreur. Un discriminateur de fréquence (non illustré) produisant un signal d'erreur indiquant l'erreur de la fréquence de battement entre la deuxième et la troisième porteuses, c.-à-d. la différence $\hat{\delta f}_{w23} = f_{w23} - \hat{f}_{w23}$, avec $f_{w23} = f_2 - f_3$, peut également être prévu.

Les sorties des discriminateurs 136, 160, 160', 160" ainsi que des discriminateurs de fréquence (non illustrés) sont traitées dans un filtre de Kalman étendu 120. Le vecteur de mesures appliqué au filtre de Kalman étendu 120 peut donc s'écrire : $z = [c\hat{\delta\tau}_1, \hat{\delta\varphi}_{w12}, \hat{\delta f}_{w12}, \hat{\delta f}_{w13}, \hat{\delta\varphi}_{w13}, \hat{\delta\varphi}_{w23}, \hat{\delta f}_{w23}]^T$. Comme sortie du filtre de Kalman étendu, on a le vecteur d'état : $x = \left[\hat{\delta\dot\rho}_\tau, \hat{\delta\dot\rho}_\varphi, \hat{\delta\dot\rho}, \hat{\delta\ddot\rho}\right]^T$, où $\hat{\delta\dot\rho}_\tau$ désigne le changement estimé de la pseudodistance entre le satellite et le récepteur depuis le pas de temps précédent, $\hat{\delta\dot\rho}_\varphi$ le changement estimé, avec l'ambiguïté sur le nombre de cycles complets, de la pseudodistance entre le satellite et le récepteur depuis le pas de temps précédent, $\hat{\delta\dot\rho}$ le changement estimé de la vitesse relative entre le satellite et le récepteur depuis le pas de temps précédent et $\delta\ddot\rho$ le changement estimé de l'accélération relative entre le satellite et le récepteur depuis le pas de temps précédent. En notant

$X = \left[\hat{\dot{\rho}}_\tau, \hat{\dot{\rho}}_\varphi, \hat{\ddot{\rho}}, \hat{\dddot{\rho}}\right]^T$, la règle de mise à jour peut être exprimée comme : $X_k = \mathbf{F}X_{k-1} + x_k$, où $\mathbf{F}$ désigne la matrice de transition (dépendant du modèle) et k est l'indice du pas de temps. On obtient l'estimée du retard de code $\hat{\tau}_1$ par $\hat{\tau}_1 = \hat{\dot{\rho}}_\tau/c$, $\hat{\tau}_2$ par $\hat{\tau}_2 = \hat{\dot{\rho}}_\tau/c$, $\hat{\tau}_3$ par $\hat{\tau}_3 = \hat{\dot{\rho}}_\tau/c$, $\hat{f}_{w12}$ par $\hat{f}_{w12} = \hat{\dot{\rho}}_\tau / \lambda_{w12}$, $\hat{\varphi}_{w12}$ par $\hat{\varphi}_{w12} = \hat{\dot{\rho}}_\varphi \cdot 2\pi / \lambda_{w12}$, $\hat{f}_{w13}$ par $\hat{f}_{w13}\, \hat{\dot{\rho}}_\tau / \lambda_{w13}$ et $\hat{\varphi}_{w13}$ par $\hat{\varphi}_{w13} = \hat{\dot{\rho}}_\varphi \cdot 2\pi / \lambda_{w13}$. Ces sorties sont utilisées pour la commande des OCN du dispositif de poursuite 110.

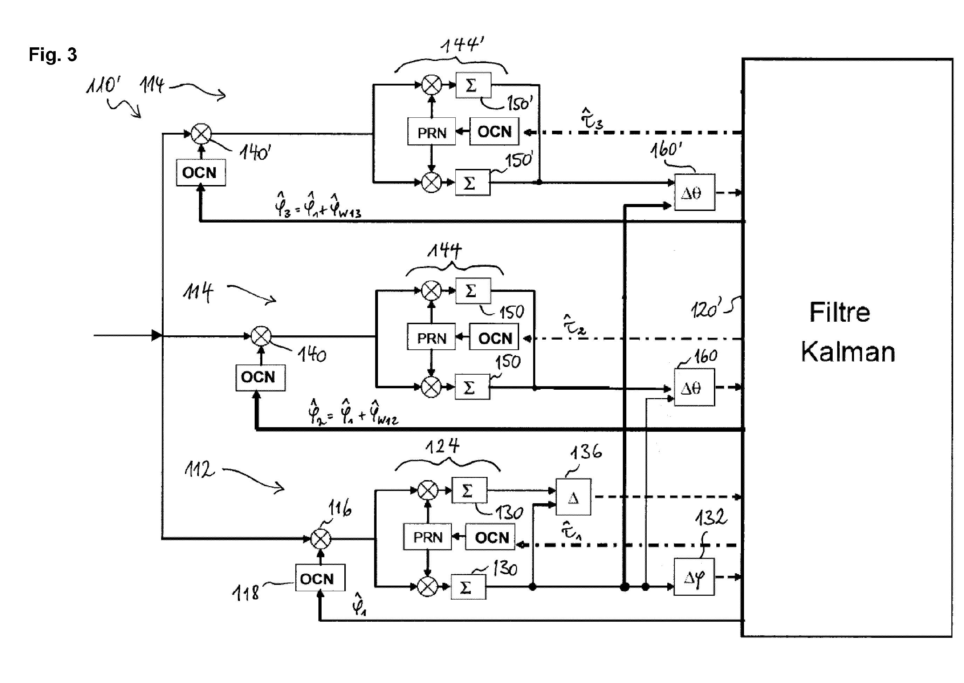

La figure 3 montre une variante 110' du dispositif de poursuite de la figure 2. Les mêmes numéros de référence ont donc été utilisés pour désigner des composantes identiques. Selon la variante de la figure 3, le filtre de Kalman étendu sort les signaux de commande de toutes les boucles de poursuite de code et de porteuse. Le vecteur de mesures appliqué au filtre de Kalman étendu 120' peut s'écrire: $z = [c\hat{\delta\tau}_1, \hat{\delta\varphi}_1, \hat{\delta f}_1, \hat{\delta\varphi}_{w12}, \hat{\delta f}_{w12}, \hat{\delta\varphi}_{w13}, \hat{\delta f}_{w13}]^T$. Le vecteur d'état est :

$$x = \left[\delta\hat{\dot{\rho}}_\tau, \delta\hat{\dot{\rho}}_\varphi, \delta\hat{\ddot{\rho}}, \delta\hat{\dddot{\rho}}\right]^T,$$ où $\delta\hat{\dot{\rho}}_\tau$ désigne le changement estimé de la pseudodistance entre le satellite et le récepteur depuis le pas de temps précédent, $\delta\hat{\dot{\rho}}_\varphi$ le changement estimé, avec l'ambiguïté sur le nombre de cycles complets, de la pseudodistance entre le satellite et le récepteur depuis le pas de temps précédent, $\delta\hat{\ddot{\rho}}$ le changement estimé de la vitesse relative entre le satellite et le récepteur depuis le pas de temps précédent et $\delta\hat{\dddot{\rho}}$ le changement estimé de l'accélération relative entre le satellite et le récepteur depuis le pas de temps précédent. En notant $X = \left[\hat{\dot{\rho}}_\tau, \hat{\dot{\rho}}_\varphi, \hat{\ddot{\rho}}, \hat{\dddot{\rho}}\right]^T,$ la règle de mise à jour peut être exprimée comme: $X_k = \mathbf{F}X_{k-1} + x_k$, où $\mathbf{F}$ désigne la matrice de transition (dépendant du modèle) et k est l'indice du pas de temps. On obtient l'estimée du retard de code $\hat{\tau}_1$ par $\hat{\tau}_1 = \hat{\dot{\rho}}_\tau/c$, $\hat{\tau}_2$ par $\hat{\tau}_2 = \hat{\dot{\rho}}_\tau/c$, $\hat{\tau}_3$ par $\hat{\tau}_3 = \hat{\dot{\rho}}_\tau/c$, $\hat{f}_{w12}$ par $\hat{f}_{w12} = \hat{\dot{\rho}}\tau / \lambda_{w12}$, $\hat{\varphi}_{w12}$ par $\hat{\varphi}_{w12} = \hat{\dot{\rho}}_\varphi \cdot 2\pi / \lambda_{w12}$, $\hat{f}_{w13}$ par $\hat{f}_{w13} = \hat{\dot{\rho}}_\tau / \lambda_{w13}$ et $\hat{\varphi}_{w13}$ par $\hat{\varphi}_{w13} = \hat{\dot{\rho}}_\varphi \cdot 2\pi / \lambda_{w13}$. Ces sorties sont utilisées pour la commande des OCN du dispositif de poursuite 110'.

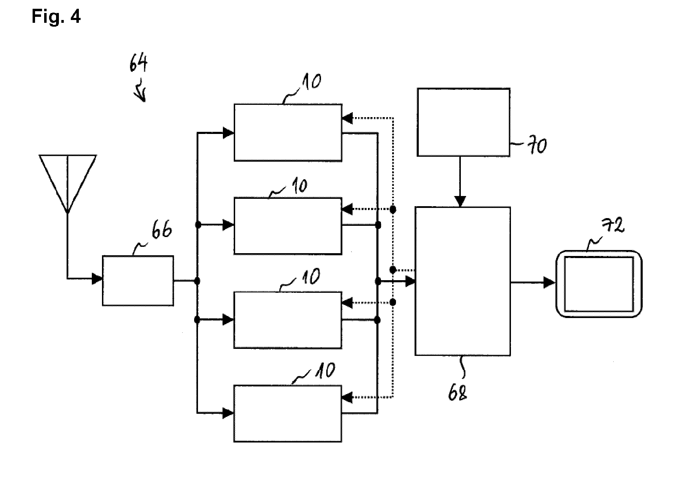

La figure 4 montre, de manière très schématique, un récepteur GNSS 64 comprenant une pluralité de dispositifs de poursuite 10 (ou 110 ou 110'). Chaque dispositif de poursuite 10 reçoit le signal entrant, transposé en fréquence (par exemple en bande de base) et numérisé par une tête HF 66 (en anglais « RF front end ») et poursuit les signaux d'un satellite (ou pseudolite) en visibilité depuis le récepteur. Les mesures faites par les dispositifs de poursuite 10 sont combinées par un module de positionnement 68, qui en déduit la position du récepteur, la vitesse, éventuellement l'accélération, et l'heure par résolution du système d'équations de navigation. Le récepteur 64 illustré comprend aussi un navigateur inertiel 70 dont les mesures sont également utilisées par le module de positionnement 68. L'information PVT (position, vitesse, temps) peut être affichée à l'utilisateur grâce à un dispositif d'affichage 72 (p.ex. sur une carte). Optionnellement, le module de positionnement 68 fournit également aux dispositifs de poursuite 10 un signal d'aide que le filtre de la boucle de la première porteuse peut utiliser pour une poursuite améliorée de la phase et de la fréquence de la première porteuse.

## Revendications

1. Dispositif de poursuite de signaux de radionavigation (10, 110, 110'), comprenant un premier étage de poursuite (12, 112) d'un premier signal de radionavigation contenu dans un signal entrant à appliquer au dispositif, le premier signal de radionavigation comprenant une première porteuse à une première fréquence modulée par une première forme d'onde d'étalement, ledit premier étage de poursuite comprenant une première boucle à verrouillage de phase de porteuse avec un mélangeur (16, 116) configuré pour multiplier le signal entrant avec une réplique locale de la première porteuse, la première boucle à verrouillage de phase de porteuse comprenant un discriminateur de phase de la première porteuse (32, 132) configuré pour produire un premier signal d'erreur résultant d'un premier écart de phase entre la première porteuse et la réplique locale de la première porteuse, la première boucle à verrouillage de phase de porteuse étant configurée pour régler la phase de la réplique locale de la première porteuse sur la base du premier signal d'erreur ;

   un deuxième étage de poursuite (14, 114) d'un deuxième signal de radionavigation contenu dans le signal entrant, le deuxième signal de radionavigation comprenant une deuxième porteuse à une deuxième fréquence, différente de la première fréquence, modulée par une deuxième forme d'onde d'étalement, le deuxième étage de poursuite comprenant une deuxième boucle à verrouillage de phase de porteuse avec un mélangeur (40, 140) configuré pour multiplier le signal entrant avec une réplique locale de la deuxième porteuse, **caractérisé en ce que** la deuxième boucle à verrouillage de phase de porteuse comprend un discriminateur de phase (60, 160) d'un battement entre la première porteuse et la deuxième porteuse configuré pour produire un deuxième signal d'erreur résultant d'une différence entre le premier écart de phase et un deuxième écart de phase entre la deuxième porteuse et la réplique locale de la deuxième porteuse ;

et **en ce que** la deuxième boucle à verrouillage de phase est configurée pour régler la phase de la réplique locale de la deuxième porteuse sur la base des premier et deuxième signaux d'erreur.

2. Dispositif selon la revendication 1, dans lequel la première boucle à verrouillage de phase comprend un oscillateur à commande numérique (18, 118), commandé par un premier filtre (34, 134) recevant le premier signal d'erreur en entrée.

3. Dispositif selon la revendication 2, dans lequel la deuxième boucle à verrouillage de phase comprend un oscillateur à commande numérique (42) commandé par le premier filtre (34, 134) et un deuxième filtre (62, 120, 120') recevant le deuxième signal d'erreur en entrée ; et
de préférence, le deuxième filtre comprend un filtre de Kalman, un filtre de Kalman étendu (120, 120') ou un filtre particulaire.

4. Dispositif selon l'une quelconque des revendications 1 à 3, dans lequel les premier et deuxième signaux de radionavigation sont choisis parmi les signaux Galileo E1, E5 et E6 ou parmi les signaux GPS L5, L2C et L1 ou parmi les signaux GLONASS L3, G2 et G1 ;
et de préférence dans lequel le premier signal de radionavigation est un signal Galileo E5 et dans lequel le deuxième signal de radionavigation est un signal Galileo E1 ou un signal Galileo E6.

5. Dispositif selon l'une quelconque des revendications 1 à 4, dans lequel le premier étage de poursuite comprend un premier corrélateur (30, 130) configuré pour corréler une réplique locale de la première forme d'onde d'étalement avec le signal entrant multiplié par la réplique locale de la première porteuse, et dans lequel le discriminateur de phase (32, 132) de la première porteuse détermine le premier signal d'erreur sur la base d'un résultat de corrélation produit par le premier corrélateur (30, 130).

6. Dispositif selon la revendication 5, dans lequel le deuxième étage de poursuite comprend un deuxième corrélateur (50, 150) configuré pour corréler une réplique locale de la deuxième forme d'onde d'étalement avec le signal entrant multiplié par la réplique locale de la deuxième porteuse, et dans lequel le discriminateur de phase (60, 160) du battement entre la première porteuse et la deuxième porteuses détermine le deuxième signal d'erreur sur la base du résultat de corrélation produit par le premier corrélateur et d'un résultat de corrélation produit par le deuxième corrélateur (50, 150).

7. Dispositif selon la revendication 6, dans lequel le discriminateur de phase (60, 160) du battement entre la première porteuse et la deuxième porteuse est configuré pour utiliser le produit du résultat de corrélation produit par le premier corrélateur (30, 130) et du conjugué complexe du résultat de corrélation produit par le deuxième corrélateur (50, 150) ou le produit du conjugué complexe du résultat de corrélation produit par le premier corrélateur (30, 130) et du résultat de corrélation produit par le deuxième corrélateur (50, 150) pour produire le deuxième signal d'erreur.

8. Dispositif selon l'une quelconque des revendications 1 à 7, comprenant un troisième étage de poursuite (114, 114') d'un troisième signal de radionavigation contenu dans le signal entrant, le troisième signal de radionavigation comprenant une troisième porteuse à une troisième fréquence, différente des première et deuxième fréquences, modulée par une troisième forme d'onde d'étalement, le troisième étage de poursuite comprenant une troisième boucle à verrouillage de phase de porteuse avec un mélangeur (140') configuré pour multiplier le signal entrant avec une réplique locale de la troisième porteuse,
la troisième boucle à verrouillage de phase de porteuse comprenant un discriminateur de phase (160') d'un battement entre la première porteuse et la troisième porteuse configuré pour produire un troisième signal d'erreur résultant d'une différence entre le premier écart de phase et un troisième écart de phase entre la troisième porteuse et la réplique locale de la troisième porteuse ;
et la troisième boucle à verrouillage de phase étant configurée pour régler la phase de la réplique locale de la troisième porteuse sur la base des premier et troisième signaux d'erreur.

9. Dispositif selon la revendication 8, dans lequel la troisième boucle à verrouillage de phase comprend un oscillateur à commande numérique commandé par le premier filtre (134) et un troisième filtre (120, 120') recevant le troisième signal d'erreur en entrée.

10. Dispositif selon la revendication 8 si dépendante de la revendication 3, dans lequel la troisième boucle à verrouillage de phase comprend un oscillateur à commande numérique commandé par le filtre de Kalman, le filtre de Kalman étendu (120, 120') ou le filtre particulaire.

**11.** Dispositif selon l'une quelconque des revendications 8 à 10, si dépendante de la revendication 5, dans lequel le troisième étage de poursuite comprend un troisième corrélateur (150') configuré pour corréler une réplique locale de la troisième forme d'onde d'étalement avec le signal entrant multiplié par la réplique locale de la troisième porteuse, et dans lequel le discriminateur de phase (160') du battement entre la première porteuse et la troisième porteuse détermine le troisième signal d'erreur sur la base du résultat de corrélation produit par le premier corrélateur (130) et d'un résultat de corrélation produit par le troisième corrélateur (150').

**12.** Dispositif selon la revendication 11, dans lequel le discriminateur de phase (160') du battement entre la première porteuse et la troisième porteuse est configuré pour utiliser le produit du résultat de corrélation produit par le premier corrélateur (130) et du conjugué complexe du résultat de corrélation produit par le troisième corrélateur (150') ou le produit du conjugué complexe du résultat de corrélation produit par le premier corrélateur (130) et du résultat de corrélation produit par le troisième corrélateur (150') pour produire le troisième signal d'erreur.

**13.** Dispositif selon l'une quelconque des revendications 1 à 12, réalisé par un processeur de signaux numériques.

**14.** Récepteur GNSS (64), comprenant un ou plusieurs dispositifs de poursuite de signaux de radionavigation (10, 110, 110') selon l'une quelconque des revendications 1 à 13.

**15.** Dispositif de positionnement et/ou de datation incluant un récepteur GNSS (64) selon la revendication 14.

**Patentansprüche**

**1.** Vorrichtung zur Verfolgung von Funknavigationssignalen (10, 110, 110'), umfassend eine erste Verfolgungsstufe (12, 112) eines ersten Funknavigationssignals, das in einem an die Vorrichtung anzulegenden eingehenden Signal enthalten ist, wobei das erste Funknavigationssignal einen mit einer ersten Spreizwellenform modulierten ersten Träger mit einer ersten Frequenz aufweist, wobei die erste Verfolgungsstufe eine erste Trägerphasenregelschleife mit einem Mischer (16, 116) umfasst, der dafür eingerichtet ist, das eingehende Signal mit einer lokalen Replik des ersten Trägers zu multiplizieren, wobei die erste Trägerphasenregelschleife einen Phasendiskriminator (32, 132) für den ersten Träger aufweist, der dafür eingerichtet ist, ein erstes Fehlersignal zu erzeugen, das aus einer ersten Phasenabweichung zwischen dem ersten Träger und der lokalen Replik des ersten Trägers resultiert, wobei die erste Trägerphasenregelschleife dafür eingerichtet ist, die Phase der lokalen Replik des ersten Trägers auf der Grundlage des ersten Fehlersignals einzustellen;
eine zweite Verfolgungsstufe (14, 114) eines in dem eingehenden Signal enthaltenen zweiten Funknavigationssignals, wobei das zweite Funknavigationssignal einen mit einer zweiten Spreizwellenform modulierten zweiten Träger mit einer zweiten Frequenz aufweist, die von der ersten Frequenz verschieden ist, wobei die zweite Verfolgungsstufe eine zweite Trägerphasenregelschleife mit einem Mischer (40, 140) umfasst, der dafür eingerichtet ist, das eingehende Signal mit einer lokalen Replik des zweiten Trägers zu multiplizieren,
**dadurch gekennzeichnet, dass** die zweite Trägerphasenregelschleife einen Phasendiskriminator (60, 160) für eine Schwebung zwischen dem ersten und dem zweiten Träger aufweist, der dafür eingerichtet ist, ein zweites Fehlersignal zu erzeugen, das aus einer Differenz zwischen der ersten Phasenabweichung und einer zweiten Phasenabweichung zwischen dem zweiten Träger und der lokalen Replik des zweiten Trägers resultiert;
und dass die zweite Phasenregelschleife dafür eingerichtet ist, die Phase der lokalen Replik des zweiten Trägers auf der Grundlage des ersten und zweiten Fehlersignals einzustellen.

**2.** Vorrichtung nach Anspruch 1, wobei die erste Phasenregelschleife einen digital gesteuerten Oszillator (18, 118) aufweist, der von einem das erste Fehlersignal am Eingang empfangenden ersten Filter (34, 134) gesteuert wird.

**3.** Vorrichtung nach Anspruch 2, wobei die zweite Phasenregelschleife einen digital gesteuerten Oszillator (42) aufweist, der von dem ersten Filter (34, 134) und einem das zweite Fehlersignal am Eingang empfangenden zweiten Filter (62, 120, 120') gesteuert wird; und
vorzugsweise der zweite Filter ein Kalmanfilter, ein erweiterter Kalmanfilter (120, 120') oder ein Partikelfilter aufweist.

**4.** Vorrichtung nach irgendeinem der Ansprüche 1 bis 3, wobei das erste und zweite Funknavigationssignal aus den Galileo-Signalen E1, E5 und E6 oder aus den GPS-Signalen L5, L2C und L1 oder aus den GLONASS-Signalen L3, G2 und G1 ausgewählt sind;
und wobei vorzugsweise das erste Funknavigationssignal ein Galileo-Signal E5 ist und das zweite Funknavigationssignal ein Galileo-Signal E1 oder ein Galileo-Signal E6 ist.

**5.** Vorrichtung nach irgendeinem der Ansprüche 1 bis 4, wobei die erste Verfolgungsstufe einen ersten Korrelator (30, 130) aufweist, der dafür eingerichtet ist, eine lokale Replik der ersten Spreizwellenform mit dem mit der lokalen Replik des ersten Trägers multiplizierten eingehenden Signal zu korrelieren, und wobei der Phasendiskriminator (32, 132) des ersten Trägers das erste Fehlersignal auf der Grundlage eines vom ersten Korrelator (30, 130) erzeugten Korrelationsergebnisses bestimmt.

**6.** Vorrichtung nach Anspruch 5, wobei die zweite Verfolgungsstufe einen zweiten Korrelator (50, 150) aufweist, der dafür eingerichtet ist, eine lokale Replik der zweiten Spreizwellenform mit dem mit der lokalen Replik des zweiten Trägers multiplizierten eingehenden Signal zu korrelieren, und wobei der Phasendiskriminator (60, 160) für die Schwebung zwischen dem ersten und dem zweiten Träger das zweite Fehlersignal auf der Grundlage des vom ersten Korrelator erzeugten Korrelationsergebnisses und eines vom zweiten Korrelator (50, 150) erzeugten Korrelationsergebnisses bestimmt.

**7.** Vorrichtung nach Anspruch 6, wobei der Phasendiskriminator (60, 160) für die Schwebung zwischen dem ersten und dem zweiten Träger dafür eingerichtet ist, das Produkt aus dem vom ersten Korrelator (30, 130) erzeugten Korrelationsergebnis und dem vom zweiten Korrelator (50, 150) erzeugten konjugiert komplexen Korrelationsergebnis oder das Produkt aus dem vom ersten Korrelator (30, 130) erzeugten konjugiert komplexen Korrelationsergebnis und dem vom zweiten Korrelator (50, 150) erzeugten Korrelationsergebnis für die Erzeugung des zweiten Fehlersignals zu verwenden.

**8.** Vorrichtung nach irgendeinem der Ansprüche 1 bis 7, umfassend eine dritte Verfolgungsstufe (114, 114') eines in dem eingehenden Signal enthaltenen dritten Funknavigationssignals, wobei das dritte Funknavigationssignal einen mit einer dritten Spreizwellenform modulierten dritten Träger mit einer dritten Frequenz aufweist, die von der ersten und zweiten Frequenz verschieden ist, wobei die dritte Verfolgungsstufe eine dritte Trägerphasenregelschleife mit einem Mischer (140') umfasst, der dafür eingerichtet ist, das eingehende Signal mit einer lokalen Replik des dritten Trägers zu multiplizieren,
wobei die dritte Trägerphasenregelschleife einen Phasendiskriminator (160') für eine Schwebung zwischen dem ersten und dem dritten Träger aufweist, der dafür eingerichtet ist, ein drittes Fehlersignal zu erzeugen, das aus einer Differenz zwischen der ersten Phasenabweichung und einer dritten Phasenabweichung zwischen dem dritten Träger und der lokalen Replik des dritten Trägers resultiert ;
und wobei die dritte Phasenregelschleife dafür eingerichtet ist, die Phase der lokalen Replik des dritten Trägers auf der Grundlage des ersten und dritten Fehlersignals einzustellen.

**9.** Vorrichtung nach Anspruch 8, wobei die dritte Phasenregelschleife einen digital gesteuerten Oszillator aufweist, der von dem ersten Filter (134) und einem das dritte Fehlersignal am Eingang empfangenden dritten Filter (120, 120') gesteuert wird.

**10.** Vorrichtung nach Anspruch 8 falls abhängig von Anspruch 3, wobei die dritte Phasenregelschleife einen digital gesteuerten Oszillator aufweist, der von dem Kalmanfilter, dem erweiterten Kalmanfilter (120, 120') oder dem Partikelfilter gesteuert wird.

**11.** Vorrichtung nach irgendeinem der Ansprüche 8 bis 10 falls abhängig von Anspruch 5, wobei die dritte Verfolgungsstufe einen dritten Korrelator (150') aufweist, der dafür eingerichtet ist, eine lokale Replik der dritten Spreizwellenform mit dem mit der lokalen Replik des dritten Trägers multiplizierten eingehenden Signal zu korrelieren, und wobei der Phasendiskriminator (160') für die Schwebung zwischen dem ersten und dem dritten Träger das dritte Fehlersignal auf der Grundlage des vom ersten Korrelator (130) erzeugten Korrelationsergebnisses und eines vom dritten Korrelator (150') erzeugten Korrelationsergebnisses bestimmt.

**12.** Vorrichtung nach Anspruch 11, wobei der Phasendiskriminator (160') für die Schwebung zwischen dem ersten und dem dritten Träger dafür eingerichtet ist, das Produkt aus dem vom ersten Korrelator (130) erzeugten Korrelationsergebnis und dem vom dritten Korrelator (150') erzeugten konjugiert komplexen Korrelationsergebnis oder das Produkt aus dem vom ersten Korrelator (130) erzeugten konjugiert komplexen Korrelationsergebnis und dem vom dritten Korrelator (150') erzeugten Korrelationsergebnis für die Erzeugung des dritten Fehlersignals zu verwenden.

**13.** Vorrichtung nach irgendeinem der Ansprüche 1 bis 12, gebildet von einem Digitalsignalprozessor.

**14.** GNSS-Empfänger (64), umfassend eine oder mehrere Vorrichtungen zur Verfolgung von Funknavigationssignalen (10, 110, 110') nach irgendeinem der Ansprüche 1 bis 13.

**15.** Vorrichtung zur Positionsbestimmung und/oder Zeitgebung, umfassend einen GNSS-Empfänger (64) nach Anspruch 14.

**Claims**

**1.** A radionavigation signal tracking device (10, 110, 110') comprising a first tracking stage (12, 112) of a first radionavigation signal contained in an incoming signal to be applied to the device, the first radionavigation signal comprising a first carrier at a first frequency modulated by a first spreading waveform, said first tracking stage comprising a first carrier phase-locked loop with a mixer (16, 116) configured to multiply the incoming signal with a local replica of the first carrier, the first carrier phase-locked loop comprising a phase discriminator of the first carrier (32, 132) configured to produce a first error signal arising from a first phase difference between the first carrier and the local replica of the first carrier, the first carrier phase-locked loop being configured to adjust the phase of the local replica of the first carrier on the basis of the first error signal;
a second tracking stage (14, 114) of a second radionavigation signal contained in the incoming signal, the second radionavigation signal comprising a second carrier at a second frequency, different from the first frequency, modulated by a second spreading waveform, the second tracking stage comprising a second carrier phase-locked loop with a mixer (40, 140) configured to multiply the incoming signal with a local replica of the second carrier, **characterised in that** the second carrier phase-locked loop comprises a phase discriminator (60, 160) of a beat between the first carrier and the second carrier configured to produce a second error signal arising from a difference between the first phase difference and a second phase difference between the second carrier and the local replica of the second carrier;
and **in that** the second phase-locked loop is configured to adjust the phase of the local replica of the second carrier on the basis of the first and second error signals.

**2.** A device according to claim 1, in which the first phase-locked loop comprises a numerically controlled oscillator (18, 118) controlled by a first filter (34, 134) receiving the first error signal as input.

**3.** A device according to claim 2, in which the second phase-locked loop comprises a numerically controlled oscillator (42) controlled by the first filter (34, 134) and a second filter (62, 120, 120') receiving the second error signal as input; and preferably the second filter comprises a Kalman filter, an extended Kalman filter (120, 120') or a particle filter.

**4.** A device according to any one of claims 1 to 3, in which the first and second radionavigation signals are selected from among Galileo E1, E5 and E6 signals or among GPS L5, L2C and L1 signals or among GLONASS L3, G2 and G1 signals; and preferably in which the first radionavigation signal is a Galileo E5 signal and in which the second radionavigation signal is a Galileo E1 signal or Galileo E6 signal.

**5.** A device according to any one of claims 1 to 4, in which the first tracking stage comprises a first correlator (30, 130) configured to correlate a local replica of the first spreading waveform with the incoming signal multiplied by the local replica of the first carrier, and in which the phase discriminator (32, 132) of the first carrier determines the first error signal on the basis of a correlation result produced by the first correlator (30, 130).

**6.** A device according to claim 5, in which the second tracking stage comprises a second correlator (50, 150) configured to correlate a local replica of the second spreading waveform with the incoming signal multiplied by the local replica of the second carrier, and in which the phase discriminator (60, 160) of the beat between the first carrier and the second carrier determines the second error signal on the basis of the correlation result produced by the first correlator and a correlation result produced by the second correlator (50, 150).

**7.** A device according to claim 6, in which the phase discriminator (60, 160) of the beat between the first carrier and the second carrier is configured to use the product of the correlation result produced by the first correlator (30, 130) and of the complex conjugate of the correlation result produced by the second correlator (50, 150) or the product of the complex conjugate of the correlation result produced by the first correlator (30, 130) and of the correlation result produced by the second correlator (50, 150) to produce the second error signal.

**8.** A device according to any one of claims 1 to 7, comprising a third tracking stage (114, 114') of a third radionavigation signal contained in the incoming signal, the third radionavigation signal comprising a third carrier at a third frequency, different from the first and second frequencies, modulated by a third spreading waveform, the third tracking stage comprising a third carrier phase-locked loop with a mixer (140') configured to multiply the incoming signal with a local replica of the third carrier,
the third carrier phase-locked loop comprising a phase discriminator (160') of a beat between the first carrier and the third carrier configured to produce a third error signal arising from a difference between the first phase difference and a third phase difference between the third carrier and the local replica of the third carrier;
and the third phase-locked loop being configured to adjust the phase of the local replica of the third carrier on the basis of the first and third error signals.

9. A device according to claim 8, in which the third phase-locked loop comprises a numerically controlled oscillator controlled by the first filter (134) and a third filter (120, 120') receiving the third error signal as input.

10. A device according to claim 8 if dependent on claim 3, in which the third phase-locked loop comprises a numerically controlled oscillator controlled by the Kalman filter, the extended Kalman filter (120, 120') or the particle filter.

11. A device according to any one of claims 8 to 10, if dependent on claim 5, in which the third tracking stage comprises a third correlator (150') configured to correlate a local replica of the third spreading waveform with the incoming signal multiplied by the local replica of the third carrier, and in which the phase discriminator (160') of the beat between the first carrier and the third carrier determines the third error signal on the basis of the correlation result produced by the first correlator (130) and of a correlation result produced by the third correlator (150').

12. A device according to claim 11, in which the phase discriminator (160') of the beat between the first carrier and the third carrier is configured to use the product of the correlation result produced by the first correlator (130) and of the complex conjugate of the correlation result produced by the third correlator (150') or the product of the complex conjugate of the correlation result produced by the first correlator (130) and of the correlation result produced by the third correlator (150') to produce the third error signal.

13. A device according to any one of claims 1 to 12 embodied by a digital signal processor.

14. A GNSS receiver (64) comprising one or more radionavigation signal tracking devices (10, 110, 110') according to any one of claims 1 to 13.

15. A positioning and/or dating device including a GNSS receiver (64) according to claim 14.

Fig. 1

EP 2 755 050 B1

Filtre Kalman

Aide du navigateur

Boucle de porteuse

**Fig. 2**

Fig. 3

Filtre Kalman

**Fig. 4**

**EP 2 755 050 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030058163 A
- US 20050101248 A
- US 3883873 A
- FR 2941535

**Littérature non-brevet citée dans la description**

- **U. VOLLATH et al.** Analysis of Three-Carrier Ambiguity Resolution Technique for precise relative positioning in GNSS-2. *NAVIGATION, Journal of the Institute of Navigation,* 21 Mars 1999, vol. 6 (1), 13-23